# EUROPÄISCHE PATENTSCHRIFT

(11) **EP 3 201 593 B1**
(45) Veröffentlichungstag und Bekanntmachung des Hinweises auf die Patenterteilung: **20.11.2019**
(21) Anmeldenummer: 15762516.1
(22) Anmeldetag: 27.08.2015
(51) Int. Cl.: G01M 3/32

(54) **PRÜFSCHEIBENSYSTEM**
TESTING DISK
PLAQUE D'ESSAI

(30) Priorität: 29.09.2014 DE 102014114147
(43) Veröffentlichungstag der Anmeldung: 09.08.2017
(73) Patentinhaber: Keil, Michael, 35325 Mücke-Merlau (DE)
(72) Erfinder: KEIL, Michael, 35325 Mücke-Merlau (DE); KEIL, Christopher, 35325 Mücke-Merlau (DE)
(74) Vertreter: Patentanwälte Olbricht Buchhold Keulertz
(86) Internationale Anmeldenummer: PCT/EP2015/069690
(87) Internationale Veröffentlichungsnummer: WO 2016/050428

(56) Entgegenhaltungen:
- EP-A1- 2 741 067
- DE-A1- 10 145 597
- "WirelessGT - The innovative glove leak testing system", , 17. September 2012 (2012-09-17), XP055175441, Gefunden im Internet: URL:http://www.swisscleanroomconcept.ch/Us erFiles/File/Firmen/Skan/wirelessgt_brochu re_en_20140113_web.pdf [gefunden am 2015-03-11]

## Beschreibung

Die Erfindung betrifft ein Prüfscheibensystem gemäß dem Oberbegriff von Anspruch 1.

Ein derartiges Prüfscheibensystem dient zur Überprüfen des Zustands von Handschuhen, die in Ports von Isolatoren installiert sind.

Isolatoren werden in verschiedenen Bereichen der Industrie, z. B. in der Chemie, der Pharmazie, der Kerntechnik, aber auch in der Medizin benötigt, um ein von der Umgebung separiertes Volumen herzustellen, in welchem ausgewählte Substanzen aufbewahrt und manipuliert, z. B. chemischen Reaktionen unterzogen, werden können, wobei der Stofftransport in (mindestens) einer Richtung (vom Isolator zur Umgebung oder aber von der Umgebung zum Isolator) unterbunden wird.

Die Unterbindung des Stofftransports vom Isolator in die Umgebung ist z. B. erforderlich, wenn radioaktive Substanzen oder pulverförmige Chemikalien im Isolator aufbewahrt und gehandhabt werden. Isolatoren im Nuklearbereich (Glove Boxes) werden dabei mit hohem Unterdruck betrieben, um den Austritt radioaktiver Substanzen in die Umgebung unter allen Umständen zu vermeiden. Hingegen genügt bei Chemikalien ein geringer Unterdruck im Vergleich zum Atmosphärendruck.

Ein Stofftransport von der Umgebung in den Isolator muss dagegen insbesondere bei Isolatoren für aseptische pharmazeutische Prozesse unterbunden werden, um eine Kontamination des Isolatorvolumens bzw. Innenraums mit Keimen aus der Umgebung zu vermeiden. Hierfür genügt bereits ein relativ geringer Überdruck gegenüber dem Atmosphärendruck.

Vorzugsweise erfolgt die Handhabung der Substanzen im Isolator in beiden Fällen mithilfe ferngesteuerter mechanischer Manipulatoren. Es gibt jedoch eine Vielzahl von Prozessen, bei denen eine solche Automatisierung nicht oder nur mit unvertretbar hohen Kosten möglich ist, sodass auf den Menschen als Operator nicht verzichtet werden kann. Der Zugriff des Operators auf das Isolatorinnere erfolgt dabei über Durchbrüche in der Wand des Isolators, den sogenannten Ports, die mit flexiblen, hermetisch dicht eingespannten Handschuhen aus einem hinreichend widerstandsfähigen Material ausgestattet sind. Die Handschuhe können zum einen die Dichtheit (Integrität) des Isolatorvolumens sicherstellen, zum anderen aber auch dem Operator die nötige Bewegungsfreiheit geben, um die notwendigen Manipulationen im Innenraum auszuführen.

Jede Störung der Integrität des Isolators ist mit wirtschaftlichen oder sogar gesundheitlichen Risiken behaftet. Dringen beispielsweise Keime aus der Umgebung in den Isolator ein, so kann eine ganze Charge aseptisch hergestellter pharmazeutischer Produkte unbrauchbar werden. Treten im umgekehrten Fall toxische Substanzen aus dem Isolator aus, so können sie den Operator und die Umgebung gefährden. Deshalb müssen solche Störungen unbedingt verhindert und, falls sie trotz aller Gegenmaßnahmen dennoch auftreten, unmittelbar erkannt und beseitigt werden.

Mittels Prüfscheiben, die in den Ports eines Isolators eingesetzt werden, ist es nun möglich, die Unversehrtheit bzw. Dichtigkeit der am Port installierten Handschuhe zu überprüfen. Ein geeignetes Prüfscheibensystem ist beispielsweise aus EP 2 741 067 des Anmelders bekannt. Dabei wird eine auf die Form eines Ports abgestimmte Prüfscheibe in den Port eingesetzt, um ein Volumen des mit dem Port verbundenen Handschuhs unter Druck zu setzen. Anschließend erfolgt eine Überwachung des Druckverlaufs, wobei ein Druckverlust zu einem Ausschuss des Handschuhs führt, wenn er einen gewissen Grenzwert überschreitet. Um nachvollziehen zu können, welchen Port mit welchem Handschuh die Prüfscheibe gerade prüft, ist die Prüfscheibe mit einer Leseeinrichtung versehen, die Identifikationselemente des Handschuhs und des Ports ausliest und den ermittelten Druckdaten zuweist. Die jeweiligen Prüfscheiben sind dabei immer nur mit Ports einer Größe einsetzbar. Bei Anlagen mit unterschiedlichen Portgrößen ist diese Lösung daher relativ aufwendig. Darüber hinaus erfordert eine Energieversorgung der Komponenten der Prüfscheiben, die beispielsweise über extern anschließbare Akkumulatoren gelöst ist, zusätzliche verschmutzungsanfällige Schnittstellen. Auch werden die Prüfscheiben dadurch relativ unhandlich.

Der Erfindung liegt nun die Aufgabe zu Grunde, die Nachteile des Stands der Technik zu überwinden und insbesondere ein Prüfscheibensystem anzugeben, das variabel einsetzbar ist. Insbesondere soll eine Verwendung mit unterschiedlichen Ports mit geringem Aufwand möglich sein. Dabei soll die Lösung möglichst kostengünstig herstellbar sein.

Hauptmerkmale der Erfindung sind in den Ansprüchen 1 und 7 angegeben. Ausgestaltungen sind Gegenstand der Ansprüche 2 bis 6 und 8 bis 17.

Bei einem Prüfscheibensystem mit mindestens einer Prüfscheibe zur Prüfung der Dichtigkeit eines Handschuhs, der in einem Port eines Isolators installiert ist, ist erfindungsgemäß vorgesehen, dass die Prüfscheibe hermetisch dicht mit dem Port verbindbar ist, wobei der Handschuh mit der Prüfscheibe ein Handschuhvolumen einschließt, das durch die Prüfscheibe unter Überdruck setzbar ist, wobei die Prüfscheibe einen Grundkörper aufweist, in dem Elektronikkomponenten zur Aufzeichnung und Speicherung eines Druckverlaufs im Handschuhvolumen und zumindest eine Datenschnittstelle angeordnet sind, wobei die Prüfscheibe eine Leseeinrichtung sowohl zur Auslesung von einem ersten Identifikationselement, das am Handschuh angeordnet ist, als auch von einem zweiten Identifikationselements, das dem Port zugeordnet ist, aufweist. Die Prüfscheibe weist ferner zumindest eine radial expandierbare Dichteinrichtung auf, die am Grundkörper, an einem Dichtkörper und/oder an einem Dichtungsadapter angeordnet ist, wobei
- das Prüfscheibensystem einen Dichtkörper mit einer radial expandierbaren Dichteinrichtung aufweist, der eine Ausnehmung umfasst, in die der Grundkörper einsetzbar ist
   oder
   dass die Dichteinrichtung an einem Dichtungsadapter angeordnet ist, mit dem der Grundkörper über Koppelmittel lösbar verbindbar ist.

Beim erfindungsgemäßen Prüfscheibensystem ist also eine genaue Zuordnung von Prüfscheibe, Port und Handschuh zueinander feststellbar. Dadurch ist es möglich, historische Daten zum Vergleich mit aktuellen Daten heranzuziehen, unabhängig davon, ob beispielsweise der Handschuh zwischenzeitlich an einen anderen Port angeschlossen wurde oder eine andere Prüfscheibe verwendet wird. Dabei kann jede Prüfscheibe autark das Handschuhvolumen unter Druck setzen und den Druckverlauf erfassen. Somit können problemlos beliebig viele Prüfscheiben gleichzeitig eingesetzt und damit viele Handschuhe gleichzeitig überprüft werden, wodurch sich eine große Zeitersparnis ergibt.

In einer besonders bevorzugten Ausgestaltung ist im Grundkörper ein Akkumulator als elektrischer Energiespeicher angeordnet, der mit einer induktiven Ladeeinrichtung verbunden ist. Dadurch kann der Akkumulator fluiddicht innerhalb des Grundkörpers untergebracht werden, ohne dass verschmutzungsanfällige Ladeanschlüsse erforderlich sind. So wird eine glatte, leicht zu reinigende Oberfläche erhalten. Ferner ist das Laden sehr einfach, indem der Grundkörper einfach auf eine entsprechende Lademöglichkeit gelegt wird. Das Verbinden mit einem Ladestecker ist nicht erforderlich. Beispielsweise kann das Laden dann am üblichen Ablageort der Prüfscheibe erfolgen.

In einer besonderen Ausgestaltung ist der Akkumulator in einem Fach angeordnet ist, dass über einen Deckel insbesondere fluiddicht verschließbar ist, der an einer Rückseite des Grundkörpers angeordnet ist. Durch Öffnen des Deckels kann der Akkumulator dann gegebenenfalls schnell ausgetauscht werden. So kann ein leerer oder defekter Akkumulator einfach ersetzt werden, ohne den ansonsten gegen äußere Einflüsse abgedichteten Grundkörper öffnen zu müssen.

In einer alternativen Ausgestaltung ist der Akkumulator innerhalb des Grundkörpers aufgenommen, der fluiddicht geschlossen ausgebildet ist. Der Akkumulator ist damit beispielsweise vor Diebstahl oder sonstigen Verlust sicher geschützt. Auch ist dann keine zusätzliche Öffnung im Grundkörper erforderlich, so dass dieser mit weniger Aufwand dicht herstellbar ist und eine leichter zu reinigende Oberfläche aufweist. Das Eindringen von Verschmutzungen in den Bereich des Akkumulators ist bei dieser Ausgestaltung nicht möglich.

Vorzugsweise umfasst das Prüfscheibensystem eine induktive Ladestation, in die die Prüfscheibe ablegbar ist, wobei der Akkumulator der Prüfscheibe induktiv aufladbar ist. Die Ladestation kann dann durch eine entsprechende Formgebung eine sichere Unterbringung der Prüfscheibe bewirken. Gegebenenfalls kann die Ladestation auch so ausgestaltet sein, dass sie mehrere Prüfscheiben gleichzeitig aufnehmen und laden kann. Die Ladestation kann so als ständiger Ablageort gerade nicht genutzter Prüfscheiben dienen. Es ist auch möglich, die Ladestation auf einem Handwagen zu installieren, so dass die Prüfscheiben gesammelt zum gewünschten Einsatzort gefahren werden können. Ein Laden erfolgt dann entweder über einen im Handwagen installierten Energiespeicher oder durch Verbinden des Handwagens bzw. der Ladestation mit einem Stromanschluss.

Die Prüfscheibe weist eine radial expandierbare Dichteinrichtung auf. Wenn die Prüfscheibe in einen Port eingeführt wird, ist die Dichteinrichtung so ausgebildet, dass sie radial nach außen expandiert und sich so an einen Innenwandung des Ports fluiddicht anlegt. Wenn die Prüfscheibe einen Port übergreift, so dass die Dichteinrichtung außen am Port anliegt, ist sie so ausgestaltet, dass sie radial nach innen expandiert und sich entsprechend von außen fluiddicht an den Port anlegt. In beiden Fällen wird durch die Expansion der Dichteinrichtung also eine fluiddichte Verbindung zwischen Prüfscheibe und Port erhalten, durch die die Prüfscheibe fest im Port gehalten wird. Die Expansion der Dichteinrichtung kann dabei beispielsweise durch Beaufschlagen der Dichteinrichtung mittels Überdruck bewirkt werden, wofür eine entsprechende Mikropumpe in der Prüfscheibe, insbesondere im Grundkörper, untergebracht sein kann.

Besonders bevorzugt ist dabei eine Ausgestaltung, bei der die Dichteinrichtung an einem radialen Außenumfang des Grundkörpers angeordnet ist und radial nach außen expandierbar ist. Dies stellt eine relativ einfache Bauform dar, bei der die Prüfscheibe sehr flach ausgebildet sein kann.

In einer bevorzugten Weiterbildung weist das Prüfscheibensystem einen Dichtkörper mit einer zweiten radial expandierbaren Dichteinrichtung auf, der eine Ausnehmung umfasst, in die die Prüfscheibe einsetzbar ist, wobei die Prüfscheibe durch Expandieren der ersten Dichteinrichtung am Dichtkörper befestigbar ist. Die Größe und Form der Ausnehmung ist dann vorzugsweise an den Grundkörper derart angepasst, dass er formschlüssig und bündig in die Ausnehmung eingesetzt werden kann. Durch den Dichtkörper bzw. die Form der zweiten Dichteinrichtung erfolgt dann eine Anpassung an die Form des jeweiligen Ports, so dass ein Grundkörper durch Kombination mit unterschiedlichen Dichtkörpern bei unterschiedlich geformten Ports eingesetzt werden kann. Die Elektronikkomponenten und die zur Steuerung erforderlichen Mittel sind dabei alle im Grundkörper enthalten, so dass der Dichtkörper relativ kostengünstig herstellbar ist. Gegebenenfalls ist dabei zwischen Grundkörper und Dichtkörper eine druckleitende Verbindung ausgebildet, um den zum Expandieren der zweiten Dichteinrichtung erforderlichen Druck übertragen zu können. Es ist aber auch möglich, im Dichtkörper eine eigene Pumpe anzuordnen.

Die zweite Dichteinrichtung kann insbesondere an einem radialen Außenumfang des Dichtkörpers angeordnet sein. Bei dieser Ausgestaltung ist sie radial nach außen expandierbar.

In einer alternativen Ausgestaltung weist der Dichtkörper einen zylindrischen Vorsprung auf, an dessen Innenumfang oder Außenumfang die zweite Dichteinrichtung angeordnet ist. Dadurch kann der Dichtkörper so gestaltet sein, dass der Vorsprung einen Port von außen übergreift. Es ist aber auch möglich, den Dichtkörper so auszugestalten, dass der Vorsprung mit der zweiten Dichteinrichtung in einen Port einführbar ist, der kleiner ist als der Dichtkörper und/oder der Grundkörper.

In einer alternativen Ausgestaltung ist die Dichteinrichtung an einem Dichtungsadapter angeordnet, mit dem der Grundkörper über Koppelmittel lösbar verbindbar ist. Die Koppelmittel sind dabei insbesondere an einer Unterseite des Grundkörpers und einer Oberseite des Dichtungsadapters angeordnet. Der Grundkörper selbst muss dann keine Dichteinrichtung aufweisen. Vielmehr ist es ausreichend, wenn diese am Dichtungsadapter angeordnet ist. Durch Wahl eines entsprechenden Dichtungsadapters kann der Grundkörper, der alle zum Betrieb erforderlichen Elektronikkomponenten umfasst, in Kombination mit dem Dichtungsadapter, die zusammen eine Prüfscheibe bilden, dann mit unterschiedlichen Ports kombiniert werden.

Dabei ist besonders bevorzugt, dass die Dichteinrichtung an einem Außenumfang des Dichtungsadapters angeordnet ist und radial nach außen expandierbar ist. Der Dichtungsadapter kann dann relativ flach ausgebildet sein.

In einer alternativen Ausgestaltung weist der Dichtungsadapter einen zylindrischen Vorsprung auf, an dessen Innenumfang oder Außenumfang die Dichteinrichtung angeordnet ist. Durch entsprechende Ausgestaltung des Vorsprungs kann die Prüfscheibe auch bei kleineren Ports oder bei Ports, die von außen übergriffen werden, eingesetzt werden. Es ergibt sich also eine große Variabilität.

Zum Expandieren der Dichteinrichtung kann ein Mittel im Grundkörper oder im Dichtungsadapter angeordnet sein. Dieses Mittel ist insbesondere eine Pumpe, um die Dichteinrichtung mit einem Überdruck zu beaufschlagen. Die Dichteinrichtung ist dabei insbesondere schlauchartig ausgebildet.

Vorzugsweise ist der Grundkörper derart mit dem Dichtungsadapter oder dem Dichtkörper verbindbar, dass der Grundkörper bei einer im Port installierten Prüfscheibe teilweise an das Handschuhvolumen angrenzt. Dadurch ist es relativ einfach möglich, das Handschuhvolumen mittels einer im Grundkörper angeordneten Pumpe unter Druck zu setzen und einen Druckverlauf mit Hilfe der im Grundkörper angeordneten Elektronikkomponenten zu erfassen. Die Koppelmittel müssen dann nur eine mechanische Verbindung gewährleisten.

Alternativ oder zusätzlich kann zwischen dem Grundkörper und dem Dichtungsadapter mindestens eine signalleitende Verbindung und/oder mindestens eine druckleitende Verbindung ausgebildet sein. Der Grundkörper muss dann nicht direkt in Verbindung zum Handschuhvolumen gelangen. Vielmehr kann die Verbindung dann indirekt über den Dichtungsadapter erfolgen.

Vorzugsweise ist zwischen dem Grundkörper und dem Dichtungsadapter ein Dichtelement angeordnet. Damit erfolgt eine Abdichtung zwischen Grundkörper und Dichtungsadapter. Diese Abdichtung verhindert dann ein Eindringen von Verschmutzungen zwischen Grundkörper und Dichtungsadapter. Auch kann so eine Druckdichtigkeit erreicht werden, die insbesondere dann notwendig ist, wenn der Grundkörper an das Handschuhvolumen angrenzt.

In einer bevorzugten Ausgestaltung sind die Koppelmittel als Schnellverschluss, insbesondere als Bajonettverschluss ausgebildet. Damit ist eine schnelle und sichere Verbindung zwischen dem Grundkörper und unterschiedlichen Dichtungsadaptern möglich. Somit kann die Anpassung an unterschiedliche Ports sehr schnell und einfach erfolgen.

Das Mittel zum Expandieren der ersten und/oder zweiten Dichteinrichtung kann insbesondere als Mikroluftpumpe ausgebildet sein, wobei gegebenenfalls bei Vorhandensein einer entsprechenden druckleitenden Verbindung beide Dichteinrichtungen über das gleiche Mittel expandiert werden können. Diese Pumpe oder eine zusätzliche Pumpe, die insbesondere im Grundkörper angeordnet ist, kann auch zum Druckbeaufschlagen des Handschuhvolumens dienen.

Zur automatischen Einstellung eines Drucks im Handschuhvolumen umfassen die Elektronickomponenten insbesondere eine entsprechende Regeleinrichtung.

Die Leseeinrichtung weist insbesondere ein RFID-Modul, CCD-Sensoren oder Lasersensoren auf.

Über die Datenschnittstelle sind vorteilhafterweise der Druckverlauf und Informationsdaten der Identifikationselemente an eine Auswerteeinheit eines Prüfsystems insbesondere kabellos und gegebenenfalls verschlüsselt übertragbar sind. Die Datenschnittstelle kann dabei ein WiFi-Modul, ein W-LAN-Modul, ein Bluetooth-Modul oder ein anderes funkbasiertes Sende-/Empfangsmodul aufweisen.

Das Prüfsystem umfasst bevorzugterweise eine Auswerteeinheit, die eine Speichereinheit und eine Ausgabeeinheit aufweist und gegebenenfalls mit einer Anwenderdatenbank verbindbar ist, wobei der Druckverlauf mit den Identifikationsdaten genau einem Handschuh und einem Port zuordbar ist und eine Bewertung eines Zustands und/oder eine Abschätzung einer Restnutzungsdauer des Handschuhs erfolgen kann.

Die Auswerteeinheit verfügt dabei zur Kommunikation mit der Datenschnittstelle der Prüfscheibe vorzugsweise über ein WiFi-Modul, ein W-LAN-Modul, ein Bluetooth-Modul oder ein anderes funkbasiertes Sende-/Empfangsmodul.

Dabei können in der Auswerteinheit prozessbezogene Daten über die Verwendung des Handschuhs hinterlegbar sein, die bei der Auswertung berücksichtigt werden können.

Mit der Auswerteeinheit können beim Einsatz einer Mehrzahl von Prüfscheiben zur gleichzeitigen Prüfung mehrerer Handschuhe die Prüfscheiben gleichzeitig mit der Auswerteeinheit kommunizieren. Damit ist eine zeitsparende Messung auch vieler Ports bzw. Handschuhe gleichzeitig möglich.

Der Handschuh ist in der Regel in den Port eines Isolators hermetisch dicht einsetzbar ist, wobei der Handschuh und der Port jeweils ein Identifikationselement zum Auslesen durch die Leseeinrichtung des Prüfsystems aufweist.

Das Bewerten der Dichtigkeit eines Handschuhs mit einer Prüfscheibe erfolgt dabei dadurch, dass der Grundkörper entweder direkt, in Verbindung mit dem Dichtungsadapter oder mit dem Dichtkörper druckdicht am Port eines Isolators angeschlossen wird. Die druckdichte Verbindung wird dabei durch Expansion des oder der Dichteinrichtungen erhalten. Anschließend wird das Handschuhvolumen mit einem Überdruck beaufschlagt, beispielsweise durch Betätigen einer im Grundkörper angeordneten Pumpe. Anschließend wird der Druckverlauf des Handschuhvolumens über einen vorgebbaren Zeitraum erfasst, wobei dem Druckverlauf Informationsdaten des Handschuhs und des Ports zugeordnet werden. Aus dem Druckverlauf wird ein Druckabfall ermittelt, der mit einem Grenzwert verglichen wird. Je nachdem, ob der Grenzwert überschritten oder unterschritten wird, wird der entsprechende Handschuh dann als defekt gemeldet und muss ausgetauscht werden. Bei der Bewertung des Zustands des Handschuhs können historische Daten, insbesondere Prozessdaten, berücksichtigt werden, wobei insbesondere eine Restnutzungsdauer des Handschuhs abgeschätzt wird.

Vorzugsweise werden die Druckverläufe von mehreren Prüfscheiben für eine Mehrzahl von Handschuhen gleichzeitig empfangen und verarbeitet, wobei eine eindeutige Zuordnung der jeweiligen Druckverläufe zu einem entsprechenden Handschuh und Port erfolgt. Dabei kann gegebenenfalls ein Entfernen der Prüfscheibe aus dem Port verhindert werden, wenn ein Defekt des Handschuhs festgestellt wird.

Vorzugsweise wird ein zu einem früheren Zeitpunkt für einen bestimmten Handschuh aufgenommener Druckverlauf mit einem zu einem späteren Zeitpunkt für diesen Handschuh aufgenommenen Druckverlauf verglichen, wobei dieser Vergleich zur Abschätzung einer Restnutzungsdauer berücksichtigt wird.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine Prüfscheibe in Draufsicht,
- Fig. 2: die Prüfscheibe mit induktiver Ladestation in geschnittener Seitenansicht,
- Fig. 3: die Prüfscheibe mit induktiver Ladestation in alternativer Ausgestaltung in geschnittener Seitenansicht,
- Fig. 4: die Prüfscheibe mit Grundkörper und einer Dichteinrichtung einer ersten Ausführungs-form,
- Fig. 5: die Prüfscheibe mit Grundkörper und einer Dichteinrichtung einer zweiten Ausführungs-form,
- Fig. 6: die Prüfscheibe mit Grundkörper in einer ersten Ausgestaltung und einem Dichtkörper und
- Fig. 7: die Prüfscheibe mit Grundkörper in einer zweiten Ausgestaltung und einem Dichtkörper.

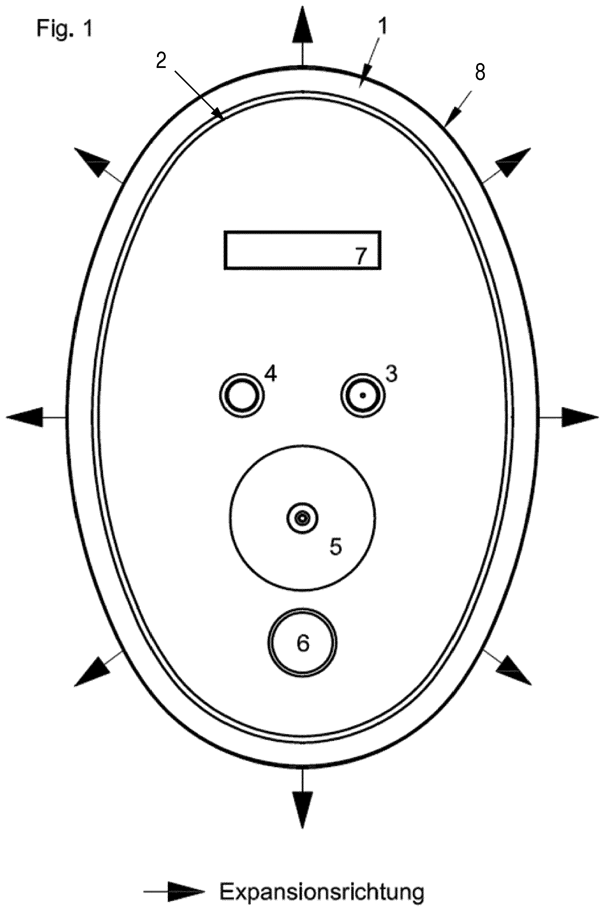

In Fig. 1 ist eine Prüfscheibe 1 dargestellt. Die Prüfscheibe 1 weist einen Grundkörper 2 auf, an dessen Vorderseite ein Ein-/ Aus- Schalter 3, eine Start-/Stop-Taste 4, ein Befüllventil 5 zum Füllen eines Handschuhvolumens, ein Vorfilter 6 und ein LCD-Display 7 angeordnet sind. Die Prüfscheibe 1 weist eine erste Dichteinrichtung 8 auf, die den ovalen Grundkörper 2 radial umlaufend umgibt. Durch Aufblasen der schlauchförmigen ersten Dichteinrichtung 8 expandiert diese nach außen in eine Richtung, die durch Pfeile symbolisiert ist.

In Fig. 1 ist also eine Prüfscheibe 1 dargestellt, die in einen den Port bildenden Durchbruch eingesetzt werden kann und eine Abdichtung von innen nach außen bewirkt. Innerhalb des Grundkörpers der Prüfscheibe sind Elektronikkomponenten wie ein Drucksensor zum Erfassen eines Drucks im Handschuhvolumen, eine Druckmesseinrichtung mit einem Mikroprozessor und ein Drucksensor zum Erfassen des Drucks in der Dichteinrichtung angeordnet. Ferner ist ein Ventil zum Befüllen der Dichteinrichtung über eine erste Pumpe vorgesehen. Zum Befüllen des Handschuhvolumens dient eine zweite Pumpe. Als Leseeinrichtung zum Auslesen von Identifikationselementen des Handschuhs und des Ports dient ein RFID-Modul, wobei zur Datenübertragung an eine Auswerteeinheit eine Schnittstelle mit einem WiFi-Modul vorgesehen ist. Zur Energieversorgung der einzelnen Komponenten dient eine Energiequelle.

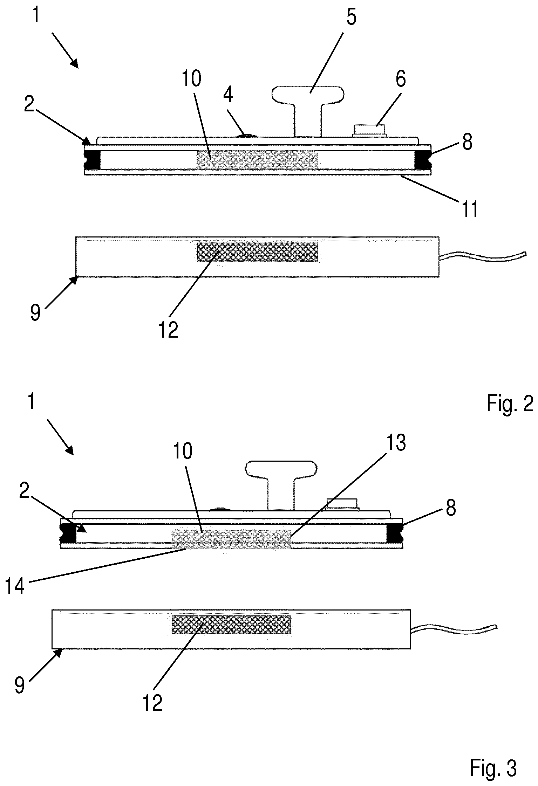

In Fig. 2 ist die Prüfscheibe 1 mit Grundkörper 2 und umlaufender erster Dichteinrichtung 8 zusammen mit einer induktiven Ladestation 9 in geschnittener Seitenansicht dargestellt. Im Grundkörper 2 ist ein Akkumulator 10 angeordnet, wobei eine Rückseite 11 des Grundkörpers 2 vollständig geschlossen ist. Der Akkumulator 10 ist also vollständig geschützt innerhalb des fluiddicht geschlossenen Grundkörpers 2 angeordnet.

Über die Ladestation 9 ist der Akkumulator 10 berührungslos, also ohne Herstellen einer leitergebundenen Verbindung, aufladbar. Dafür muss die Prüfscheibe nur über einer entsprechenden induktiven Ladeeinrichtung 12 der Ladestation 9 angeordnet werden. Im einfachsten Fall wird die Prüfscheibe 1 dort einfach abgelegt. Die Ladestation 9 verfügt über ein Anschlusskabel 13, über das elektrische Energie beispielsweise von einem öffentlichen Versorgungsnetz zugeführt werden kann.

In Fig. 3 ist eine alternative Ausgestaltung des Grundkörpers 2 dargestellt, bei der der Akkumulator 10 in einem Fach 13 im Grundkörper 2 untergebracht ist, dass über einen Deckel 14 fluiddicht verschließbar ist. Der Deckel schließt dabei insbesondere bündig mit der Rückseite 11 ab. Die Ladestation 9 ist unverändert.

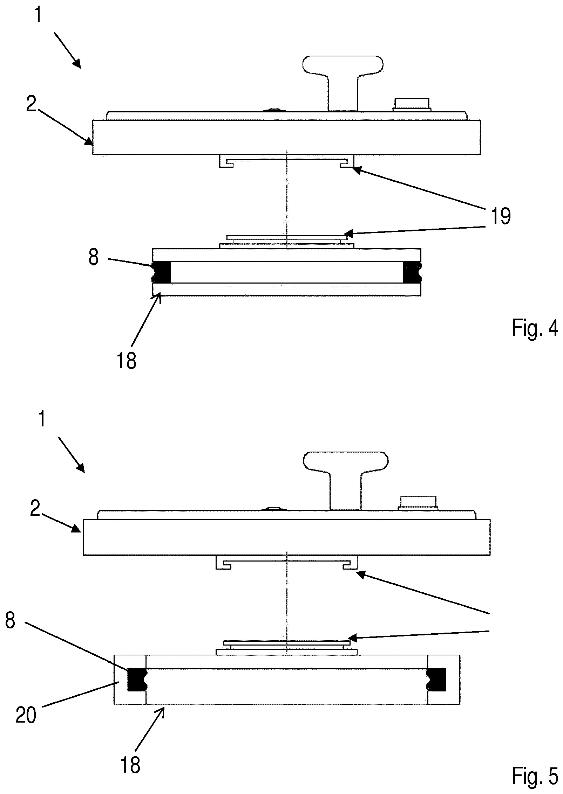

Fig. 4 zeigt ein Prüfsystem umfassend einen Grundkörper 2 und eine Dichtungsadapter 18, die über Koppelmittel 19, die als Bajonettverschluss ausgebildet sind, miteinander verbunden werden können. Am Dichtungsadapter 18 ist dabei die umlaufende, radial expandierbare Dichteinrichtung 8 angeordnet. Die Prüfscheibe wird also durch die Kombination von Grundkörper 2 und Dichtungsadapter 18 gebildet. Durch entsprechende Auswahl des Dichtungsadapters kann dieses Prüfsystem so unter Verwendung des gleichen Grundkörpers 2 in unterschiedliche Ports eingesetzt werden.

Fig. 5 zeigt eine gegenüber Fig. 4 alternative Ausgestaltung des Dichtungsadapters 18. Dabei ist die erste Dichteinrichtung 8 an einer Innenseite eines zylindrischen Fortsatzes 19 des Dichtungsadapters 18 angeordnet, so dass ein Port übergriffen werden kann. Es erfolgt nach Expansion der Dichteinrichtung 8, wodurch sich diese von radial nach innen ausdehnt, eine Abdichtung von außen nach innen. Im Übrigen entspricht diese Ausgestaltung der vorherigen Ausgestaltung.

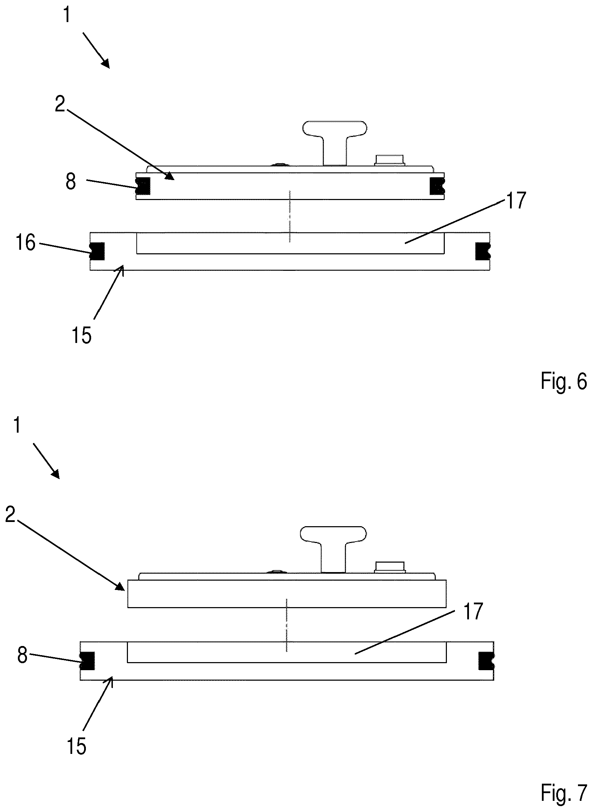

In Fig. 6 ist ein Prüfsystem umfassend eine Prüfscheibe 1 mit Grundkörper 2 und erster Dichteinrichtung 8 sowie einem Dichtkörper 15 mit einer zweiten Dichteinrichtung 16 in geschnittener Seitenansicht dargestellt.

Um die Prüfscheibe 1 in Ports mit einen anderen Öffnung fluiddicht einsetzen zu können, ist der austauschbare Dichtkörper 15 vorgesehen. Der Grundkörper 2 wird dafür in eine entsprechende Ausnehmung 17 des ausgewählten Dichtkörpers 15 insbesondere bündig eingesetzt. Durch Expandieren der ersten Dichteinrichtung 8 erfolgt anschließend eine sichere Befestigung des Grundkörpers mit den Elektronikkomponenten innerhalb des Dichtkörpers 15. Diese können nun zusammen in einen entsprechenden Port eingesetzt werden, woraufhin die zweite Dichteinrichtung 16 expandiert wird, so dass die Prüfscheibe sicher und fluiddicht im Port gehalten ist. Die Ausnehmung 17 ist bei dieser Ausgestaltung mit einem Boden ausgebildet. Dementsprechend erfolgt eine Druckbeaufschlagung des Handschuhvolumens durch entsprechende, im Dichtkörper ausgebildete Druckleitungen oder durch nicht dargestellte Öffnungen im Boden der Ausnehmung 17.

In Fig. 7 ist eine alternative Ausgestaltung dargestellt, bei der der Grundkörper im Unterschied zur Ausgestaltung nach Fig. 6 nicht mit einer umlaufenden Dichteinrichtung versehen ist. Dadurch ist der Grundkörper nicht selbst als Prüfscheibe einsetzbar, sondern immer nur in Verbindung mit einem entsprechenden Dichtkörper. Gegebenenfalls kann über entsprechende Dichtelemente eine Abdichtung des Grundkörpers in der Ausnehmung erfolgen, so dass die Unterseite des Grundkörpers in druckleitenden Kontakt mit dem Handschuhvolumen gelangen kann, ohne dass ein Druckverlust zu befürchten ist.

Die Erfindung ist nicht auf eine der vorbeschriebenen Ausführungsformen beschränkt, sondern in vielfältiger Weise abwandelbar.

So kann insbesondere die Anordnung der Dichteinrichtung auch bei den in Fig. 1 bis 3 sowie 6 und 7 gezeigten Beispielen analog zu der Ausgestaltung nach Fig. 5 so ausgestaltet sein, dass ein Übergreifen des Ports und eine Abdichtung von außen nach innen erfolgt. Auch kann gegebenenfalls im Dichtungsadapter bzw. im Dichtkörper eine zusätzliche Pumpe zum Expandieren der jeweiligen Druckeinrichtung und/oder zum Druckbeaufschlagen des Handschuhvolumens angeordnet sein. Es ist aber auch denkbar, dafür eine im Grundkörper angeordnete Pumpe zu verwenden.

### Bezugszeichenliste

- 1: Prüfscheibe
- 2: Grundkörper
- 3: Ein-/Aus-Schalter
- 4: Start/Stop-Taste
- 5: Befüllventil
- 6: Vorfilter
- 7: LCD-Display
- 8: Erste Dichteinrichtung
- 9: Ladestation
- 10: Akkumulator
- 11: Rückseite
- 12: Ladeeinrichtung
- 13: Fach
- 14: Deckel
- 15: Dichtkörper
- 16: Dichteinrichtung
- 17: Ausnehmung
- 18: Dichtadapter
- 19: Koppelmittel
- 20: Vorsprung

## Patentansprüche

1. Prüfscheibensystem mit mindestens einer Prüfscheibe zur Prüfung der Dichtigkeit eines Handschuhs, der in einem Port eines Isolators installiert ist, wobei die Prüfscheibe (1) hermetisch dicht mit dem Port verbindbar ist, wobei der Handschuh mit der Prüfscheibe (1) ein Handschuhvolumen einschließt, das durch die Prüfscheibe (1) unter Überdruck setzbar ist, wobei die Prüfscheibe (1) einen Grundkörper (2) aufweist, in dem Elektronikkomponenten zur Aufzeichnung und Speicherung eines Druckverlaufs im Handschuhvolumen und zumindest eine Datenschnittstelle angeordnet sind, wobei die Prüfscheibe (1) eine Leseeinrichtung sowohl zur Auslesung von einem ersten Identifikationselement, das am Handschuh angeordnet ist, als auch von einem zweiten Identifikationselements, das dem Port zugeordnet ist, aufweist, **dadurch**
**gekennzeichnet, dass**
• das Prüfscheibensystem einen Dichtkörper (15) mit einer radial expandierbaren Dichteinrichtung (16) aufweist, der eine Ausnehmung (17) umfasst, in die der Grundkörper (2) einsetzbar ist.

2. Prüfscheibensystem nach Anspruch 1, **dadurch gekennzeichnet, dass** der Grundkörper (2) durch Expandieren der ersten Dichteinrichtung (8), die am Grundkörper (2) angeordnet ist, am Dichtkörper (15) befestigbar ist.

3. Prüfscheibensystem nach einem der Ansprüche 1 oder 2, **dadurch gekennzeichnet, dass** die zweite Dichteinrichtung (16) an einem radialen Außenumfang des Dichtkörpers (15) angeordnet ist und radial nach außen expandierbar ist.

4. Prüfscheibensystem nach einem der Ansprüche 1 bis 3, **dadurch gekennzeichnet, dass** der Dichtkörper (15) einen zylindrischen Vorsprung aufweist, an dessen Innenumfang oder Außenumfang die zweite Dichteinrichtung (16) angeordnet ist.

5. Prüfscheibensystem nach einem der Ansprüche 1 bis 5, **dadurch gekennzeichnet, dass** ein Mittel zum Expandieren der Dichteinrichtung (8, 16) im Grundkörper (2) oder im Dichtkörper (15) angeordnet ist.

6. Prüfscheibensystem nach einem der Ansprüche 1 bis 6, **dadurch gekennzeichnet, dass** zwischen dem Grundkörper (2) und dem Dichtkörper (15) mindestens eine signalleitende Verbindung und/oder mindestens eine druckleitende Verbindung ausgebildet ist.

7. Prüfscheibensystem mit mindestens einer Prüfscheibe zur Prüfung der Dichtigkeit eines Handschuhs, der in einem Port eines Isolators installiert ist, wobei die Prüfscheibe (1) hermetisch dicht mit dem Port verbindbar ist, wobei der Handschuh mit der Prüfscheibe (1) ein Handschuhvolumen einschließt, das durch die Prüfscheibe (1) unter Überdruck setzbar ist, wobei die Prüfscheibe (1) einen Grundkörper (2) aufweist, in dem Elektronikkomponenten zur Aufzeichnung und Speicherung eines Druckverlaufs im Handschuhvolumen und zumindest eine Datenschnittstelle angeordnet sind, wobei die Prüfscheibe (1) eine Leseeinrichtung sowohl zur Auslesung von einem ersten Identifikationselement, das am Handschuh angeordnet ist, als auch von einem zweiten Identifikationselements, das dem Port zugeordnet ist, aufweist, **dadurch**
**gekennzeichnet, dass** die Prüfscheibe (1) zumindest eine radial expandierbare Dichteinrichtung (8, 16) aufweist, wobei
• die Dichteinrichtung (8, 16) an einem Dichtungsadapter (18) angeordnet ist, mit dem der Grundkörper (2) über ein Koppelmittel (19) lösbar verbindbar ist.

8. Prüfscheibensystem nach Anspruch 7, **dadurch gekennzeichnet, dass** die Dichteinrichtung (8) an einem Außenumfang des Dichtungsadapters (18) angeordnet ist und radial nach außen expandierbar ist.

9. Prüfscheibensystem nach Anspruch 7, **dadurch gekennzeichnet, dass** der Dichtungsadapter (18) einen zylindrischen Vorsprung (20) aufweist, an dessen Innenumfang oder Außenumfang die Dichteinrichtung (8) angeordnet ist.

10. Prüfscheibensystem nach einem der Ansprüche 7 bis 9, **dadurch gekennzeichnet, dass** ein Mittel zum Expandieren der Dichteinrichtung (8, 16) im Grundkörper (2) oder im Dichtungsadapter (18) angeordnet ist.

11. Prüfscheibensystem nach einem der Ansprüche 7 bis 10, **dadurch gekennzeichnet, dass** zwischen dem Grundkörper (2) und dem Dichtungsadapter (18) mindestens eine signalleitende Verbindung und/oder mindestens eine druckleitende Verbindung ausgebildet ist.

12. Prüfscheibensystem nach einem der Ansprüche 7 bis 11, **dadurch gekennzeichnet, dass** die Koppelmittel (19) als Schnellverschluss, insbesondere als Bajonettverschluss ausgebildet sind.

13. Prüfscheibensystem nach einem der vorhergehenden Ansprüche, **dadurch gekennzeichnet, dass** im Grundkörper (2) ein Akkumulator (10) als elektrischer Energiespeicher angeordnet ist, der induktiv aufladbar ist.

14. Prüfscheibensystem nach Anspruch 13, **dadurch gekennzeichnet, dass** der Akkumulator (10) in einem Fach (13) angeordnet ist, dass über einen Deckel (14) insbesondere fluiddicht verschließbar ist, der an einer Rückseite (11) des Grundkörpers (2) angeordnet ist.

15. Prüfscheibensystem nach Anspruch 13, **dadurch gekennzeichnet, dass** der Akkumulator (10) innerhalb des Grundkörpers (2) aufgenommen ist, der fluiddicht geschlossen ausgebildet ist.

16. Prüfscheibensystem nach einem der Ansprüche 13 bis 15, **dadurch gekennzeichnet, dass** es eine induktive Ladestation (9) umfasst, auf die die Prüfscheibe (1) ablegbar ist, wobei der Akkumulator (10) der Prüfscheibe (1) induktiv aufladbar ist.

17. Prüfscheibensystem nach einem der vorhergehenden Ansprüche, **dadurch gekennzeichnet, dass** im Grundkörper (2) eine Pumpe zum Druckbeaufschlagen des Handschuhvolumens angeordnet ist.

## Claims

1. Test disk system with at least one test disk for testing the seal of a glove which is installed in a port of an isolator, wherein the test disk (1) is connectable in a hermetically sealed fashion to the port, wherein the glove includes with the test disk (1) a glove volume which can be subjected to overpressure by the test disk (1), wherein the test disk (1) has a base body (2) in which
electronic components for recording and storing a pressure profile in the glove volume and at least one data interface are arranged, wherein the test disk (1) has a reading apparatus for reading both a first identification element which is arranged on the glove and a second identification element which is assigned to the port, **characterised in that**
• the test disk system has at least one sealing body (15) with a radially expandable sealing apparatus (16) which comprises a recess (17) into which the base body (2) can be inserted.

2. Test disk system according to claim 1, **characterised in that** the base body (2) can be fastened to the sealing body (15) by expanding the first sealing apparatus (8), which is arranged on the base body (2).

3. Test disk system according to any of claims 1 or 2, **characterised in that** the second sealing apparatus (16) is arranged on a radial outer circumference of the sealing body (15) and is radially outwardly expandable.

4. Test disk system according to any of claims 1 to 3, **characterised in that** the sealing body (15) has a cylindrical projection, on the inner circumference or outer circumference of which the second sealing apparatus (16) is arranged.

5. Test disk system according to any of claims 1 to 5, **characterised in that** a means for expanding the sealing apparatus (8, 16) is arranged in the base body (2) or in the sealing body (15).

6. Test disk system according to any of claims 1 to 6, **characterised in that** at least one signal-conducting connection and/or at least one pressure-conducting connection is formed between the base body (2) and the sealing body (15).

7. Test disk system with at least one test disk for testing the seal of a glove which is installed in a port of an isolator, wherein the test disk (1) is connectable in a hermetically sealed fashion to the port, wherein the glove includes with the test disk (1) a glove volume which can be subjected to overpressure by the test disk (1), wherein the test disk (1) has a base body (2) in which
electronic components for recording and storing a pressure profile in the glove volume and at least one data interface are arranged, wherein the test disk (1) has a reading apparatus for reading both a first identification element which is arranged on the glove and a second identification element which is assigned to the port, **characterised in that** the test disk (1) has at least one radially expandable sealing apparatus (8, 16), wherein
• the sealing apparatus (8, 16) is arranged on a sealing adapter (18) to which the base body (2) is detachably connectable via coupling means (19).

8. Test disk system according to claim 7, **characterised in that** the sealing apparatus (8) is arranged on an outer circumference of the sealing adapter (18) and is radially outwardly expandable.

9. Test disk system according to claim 7, **characterised in that** the sealing adapter (18) has a cylindrical projection (20), on the inner circumference or outer circumference of which the sealing apparatus (8) is arranged.

10. Test disk system according to any of claims 7 to 9, **characterised in that** a means for expanding the sealing apparatus (8, 16) is arranged in the base body (2) or in the sealing adapter (18).

11. Test disk system according to any of claims 7 to 10, **characterised in that** at least one signal-conducting connection and/or at least one pressure-conducting connection is formed between the base body (2) and the sealing adapter (18).

12. Test disk system according to any of claims 7 to 11, **characterised in that** the coupling means (19) are formed as a quick-release fastener, in particular as a bayonet fastener.

13. Test disk system according to any of the preceding claims, **characterised in that** an accumulator (10) is arranged in the base body (2) as an electrical power store, which can be charged inductively.

14. Test disk system according to claim 13, **characterised in that** the accumulator (10) is arranged in a compartment (13) which can be closed in an in particular fluid-tight manner via a cover (14) which is arranged on a rear side (11) of the base body (2).

15. Test disk system according to claim 13, **characterised in that** the accumulator (10) is accommodated within the base body (2), which is designed to be closed in a fluid-tight manner.

16. Test disk system according to any of claims 13 to 15, **characterised in that** comprises an inductive charging station (9), on which the test disk (1) can be deposited, wherein the accumulator (10) of the test disk (1) can be charged inductively.

17. Test disk system according to any of the preceding claims, **characterised in that** a pump is arranged in the base body (2) in order to pressurise the glove volume.

## Revendications

1. Système de disque de test avec au moins un disque de test servant à tester l'étanchéité d'un gant, qui est installé dans un orifice d'un isolant, dans lequel le disque de test (1) peut être relié de manière hermétiquement étanche à l'orifice, dans lequel le gant inclut avec le disque de test (1) un volume de gant, qui peut être placé par le biais du disque de test (1) en surpression, dans lequel le disque de test (1) présente un corps de base (2), dans lequel sont disposés des composants électroniques servant à enregistrer et à mémoriser une courbe de pression dans le volume de gant et au moins une interface de données, dans lequel le disque de test (1) présente non seulement un moyen de lecture destiné à lire un premier élément d'identification, qui est disposé sur le gant, mais aussi un second élément d'identification, qui est associé à l'orifice, **caractérisé en ce que**
• le système de disque de test présente un corps d'étanchéité (15) avec un dispositif d'étanchéité (16) expansible dans le sens radial, qui comprend un renfoncement (17), dans lequel le corps de base (2) peut être inséré.

2. Système de disque de test selon la revendication 1, **caractérisé en ce que** le corps de base (2) peut être fixé au corps d'étanchéité (15) par expansion du premier dispositif d'étanchéité (8), qui est disposé sur le corps de base (2).

3. Système de disque de test selon l'une quelconque des revendications 1 ou 2, **caractérisé en ce que**, le second dispositif d'étanchéité (16) est disposé sur un pourtour radialement extérieur du corps d'étanchéité (15) et est expansible radialement vers l'extérieur.

4. Système de disque de test selon l'une quelconque des revendications 1 à 3, **caractérisé en ce que** le corps d'étanchéité (15) présente une saillie cylindrique, dont le second dispositif d'étanchéité (16) est disposé sur son pourtour intérieur ou pourtour extérieur.

5. Système de disque de test selon l'une quelconque des revendications 1 à 5, **caractérisé en ce qu'**un moyen destiné à provoquer l'expansion du dispositif d'étanchéité (8, 16) est disposé dans le corps de base (2) ou dans le corps d'étanchéité (15).

6. Système de disque de test selon l'une quelconque des revendications 1 à 6, **caractérisé en ce qu'**au moins une liaison conductrice de signaux et/ou au moins une liaison conductrice de pression est formée entre le corps de base (2) et le corps d'étanchéité (15).

7. Système de disque comprenant au moins un disque de test servant à tester l'étanchéité d'un gant, qui est installé dans un orifice d'un isolant, dans lequel le disque de test (1) peut être relié de manière hermétiquement étanche à l'orifice, dans lequel le gant inclut avec le disque de test (1) un volume de gant, qui peut être placé par le biais du disque de test (1) en surpression, dans lequel le disque de test (1) présente un corps de base (2), dans lequel sont disposés des composants électroniques servant à enregistrer et à mémoriser une courbe de pression dans le volume de gant et au moins une interface de données, dans lequel le disque de test (1) présente non seulement un moyen de lecture destiné à lire un premier élément d'identification, qui est disposé sur le gant, mais aussi un second élément d'identification, qui est associé à l'orifice, **caractérisé en ce que** le disque de test (1) présente au moins un dispositif d'étanchéité (8, 16) expansible dans le sens radial, dans lequel
• le dispositif d'étanchéité (8, 16) est disposé sur un adaptateur d'étanchéité (18), avec lequel le corps de base (2) peut être relié de manière amovible par l'intermédiaire d'un moyen de couplage (19).

8. Système de disque de test selon la revendication 7, **caractérisé en ce que** le dispositif d'étanchéité (8) est disposé sur le pourtour extérieur de l'adaptateur d'étanchéité (18) et peut être expansible radialement vers l'extérieur.

9. Système de disque de test selon la revendication 7, **caractérisé en ce que** l'adaptateur d'étanchéité (18) présente une saillie cylindrique (20), dont le dispositif d'étanchéité (8) est disposé sur son pourtour intérieur ou pourtour extérieur.

10. Système de disque de test selon l'une quelconque des revendication 7 à 9, **caractérisé en ce qu'**un moyen destiné à provoquer l'expansion du dispositif d'étanchéité (8, 16) est disposé dans le corps de base (2) ou dans l'adaptateur d'étanchéité (18).

11. Système de disque de test selon l'une quelconque des revendication 7 à 10, **caractérisé en ce qu'**au moins une liaison conductrice de signaux et/ou au moins une liaison conductrice de pression est formée entre le corps de base (2) et l'adaptateur d'étanchéité (18).

12. Système de disque de test selon l'une quelconque des revendications 7 à 11, **caractérisé en ce que** les moyens de couplage (19) sont formés comme fermeture rapide, en particulier comme fermeture à baïonnette.

13. Système de disque de test selon l'une quelconque des revendications précédentes, **caractérisé en ce qu'**un accumulateur (10) est disposé dans le corps de base (2) comme accumulateur d'énergie électrique, qui est rechargeable par induction.

14. Système de disque de test selon la revendication 13, **caractérisé en ce que** l'accumulateur (10) est disposé dans un compartiment (13), qui peut être fermé par un couvercle (14) en particulier de manière étanche aux fluides, qui est disposé sur une face arrière (11) du corps de base (2).

15. Système de disque de test selon la revendication13, **caractérisé en ce que** l'accumulateur (10) est logé à l'intérieur du corps de base (2), qui a une configuration fermée de manière étanche aux fluides.

16. Système de disque de test selon l'une quelconque des revendications 13 à 15, **caractérisé en ce qu'**il comprend une borne de recharge (9) inductive, sur laquelle peut être déposée le disque de test (1), dans lequel l'accumulateur (10) du disque de test (1) peut être rechargé par induction.

17. Système de disque de test selon l'une quelconque des revendications précédentes, **caractérisé en ce qu'**une pompe destiné à pressuriser le volume de gant est disposée dans le corps de base (2).
